# EUROPÄISCHE PATENTSCHRIFT

(11) **EP 3 807 455 B1**
(45) Veröffentlichungstag und Bekanntmachung des Hinweises auf die Patenterteilung: **30.03.2022**
(21) Anmeldenummer: 19722593.1
(22) Anmeldetag: 06.05.2019
(51) Int. Cl.: D02G 3/48, B60C 9/00, D01F 6/62

(54) **VERSTÄRKUNGSCORD FÜR ELASTOMERE ERZEUGNISSE, INSBESONDERE FÜR FAHRZEUGLUFTREIFEN, UND ELASTOMERES ERZEUGNIS**
REINFORCEMENT CORD FOR ELASTOMER PRODUCTS, IN PARTICULAR FOR VEHICLE TIRES, AND ELASTOMER PRODUCT
CÂBLÉ DE RENFORT POUR PRODUITS ÉLASTOMÈRES, EN PARTICULIER POUR PNEUS DE VÉHICULE, ET PRODUIT ÉLASTOMÈRE

(30) Priorität: 14.06.2018 DE 102018209525
(43) Veröffentlichungstag der Anmeldung: 21.04.2021
(73) Patentinhaber: Continental Reifen Deutschland GmbH, 30165 Hannover (DE)
(72) Erfinder: SCHUNACK, Michael, 30165 Hannover (DE); KRAMER, Thomas, 30165 Hannover (DE)
(74) Vertreter: Continental Corporation
(86) Internationale Anmeldenummer: PCT/EP2019/061476
(87) Internationale Veröffentlichungsnummer: WO 2019/238312

(56) Entgegenhaltungen:
- WO-A1-2014/040804
- ZIA KHALID MAHMOOD ET AL: "Recent developments and future prospects on bio-based polyesters derived from renewable resources: A review", INTERNATIONAL JOURNAL OF BIOLOGICAL MACROMOLECULES, ELSEVIER BV, NL, Bd. 82, 19. Oktober 2015 (2015-10-19), Seiten 1028-1040, XP029357945, ISSN: 0141-8130, DOI: 10.1016/J.IJBIOMAC.2015.10.040
- JIANHUI ZHU ET AL: "Poly(butylene 2,5-furan dicarboxylate), a Biobased Alternative to PBT: Synthesis, Physical Properties, and Crystal Structure", MACROMOLECULES, Bd. 46, Nr. 3, 12. Februar 2013 (2013-02-12), Seiten 796-804, XP055614034, WASHINGTON, DC, UNITED STATES ISSN: 0024-9297, DOI: 10.1021/ma3023298
- HAJIME NAKAJIMA, PETER DIJKSTRA, KATJA LOOS: "The Recent Developments in Biobased Polymers toward General and Engineering Applications: Polymers that Are Upgraded from Biodegradable Polymers, Analogous to Pertroleum-Derived Polymers, and Newly Developed", POLYMERS, Bd. 9, Nr. 10, 18. Oktober 2017 (2017-10-18), Seiten 1-26, XP002793642, DOI: /10.3390/polym9100523

## Beschreibung

Die Erfindung betrifft einen Verstärkungscord für elastomere Erzeugnisse, insbesondere für Fahrzeugluftreifen, enthaltend zumindest ein Garn aus Filamenten.

Ferner betrifft die Erfindung ein elastomeres Erzeugnis, das zumindest einen Verstärkungscord enthält.

Eine Vielzahl elastomerer Erzeugnisse, wie Schläuche, Förderbänder, Antriebsriemen und Fahrzeugluftreifen, sind mit Verstärkungscorden zur Verstärkung versehen. Verstärkungscorde bestehen aus einem oder mehreren miteinander verdrehten Garnen und sind dem Fachmann in Aufbau und Material in unterschiedlichsten Ausführungen bekannt. Dabei kann es sich bei zwei oder mehr Garnen um das gleiche Material handeln oder, wie im Fall der Hybridcorde, um wenigstens zwei verschiedene Garne. Die Garne sind in der Regel aus vielen einzelnen Filamenten (Fasern) aufgebaut. Die Verstärkungscorde werden z. B. in Form von Geweben, Gelegen oder Gewirken in den elastomeren Erzeugnissen eingesetzt und bei der Herstellung der elastomeren Erzeugnisse üblicherweise in eine Kautschukmischung eingebettet.

Bisher werden in elastomeren Erzeugnissen, insbesondere in Karkasslagen, Wulstverstärkern, Gürteln oder Gürtelbandagen von Fahrzeugluftreifen, einerseits stofflich primär (unmittelbar) auf fossilen Rohstoffen - wie Erdöl - basierende textile Festigkeitsträger, wie beispielsweise PET (Polyethylenterephthalat), Aramid und Nylon oder Hybridcorde aus deren Garnen eingesetzt. Andererseits ist es bekannt, nichterdölbasierte textile Festigkeitsträger aus Viskose, wie beispielsweise Rayon oder Lyocell einzusetzen.

Nachteilig an vielen Naturfasern, also an nicht-erdölbasierten Materialien als Material für Verstärkungscorde ist, dass diese keine endlose Faserstruktur und eine stark schwankende Faserqualität aufweisen.

Zudem erschwert z. B. das fehlende Schrumpfverhalten von Rayon den Einsatz beispielsweise als Gürtelbandage von Fahrzeugluftreifen. Nachteilig an Rayon ist zudem, dass Rayon feuchtigkeitsempfindlich ist und sich die Bruchkraft des Festigkeitsträgers durch Feuchtigkeitsaufnahme verringert. Zudem ist Rayon in seiner Anschaffung kostenintensiv.

Die Entwicklung geht dahin, umweltfreundliche, ressourcenschonende, auf primäre fossile Rohstoffe verzichtende Elastomerprodukte, wie Fahrzeugluftreifen, zu entwickeln und einzusetzen, ohne Einbußen in der Haltbarkeit der daraus hergestellten Produkte hinnehmen zu müssen.

So sind aus der DE 102010017107 A1 Hybridcorde für z.B. Karkasslagen und/oder Gürtelbandagen bekannt, die wenigstens aus einem Garn aus recyceltem PET (Polyethylenterephthalat) bestehen.

Aus der EP 2 590 811 A1 sind Multifilamentgarne mit Polyamid 10.10-Fasern bekannt, wobei die beiden Ausgangsmonomere 1,10-Decamethylendiamin und 1,10-Decandisäure aus Ricinusöl als nachwachsendem Rohstoff gewonnen werden. Diese Multifilamentgarne können in Fahrzeugluftreifen als Festigkeitsträger eingesetzt werden.

In der EP 2 708 380 A1 werden Verstärkungscorde für elastomere Erzeugnisse, insbesondere für Fahrzeugreifen, beschrieben, bei denen zumindest ein Garn aus PET besteht, welches vollständig oder zumindest teilweise aus nachwachsenden Rohstoffen hergestellt ist.

Die EP 2 895 648 A1 offenbart Verstärkungscorde für elastomere Erzeugnisse, insbesondere für Fahrzeugreifen, bei denen zumindest ein Garn aus PEF (Polyethylenfuranoat) besteht, welches vollständig oder zumindest teilweise aus Biomassen und/oder nachwachsenden Rohstoffen hergestellt ist. PEF neigt allerdings zu einer schnellen Kristallisation nach dem Spinnvorgang zu einem Garn, so dass das Material z. T. spröde, nicht wickelbar und nicht verstreckbar ist. PEF wird als Ersatz für PET in Erwägung gezogen. Die Anwendung von Polybutylendicarboxyfuranoat (PBF) als Hochleistungsthermoplast ist in Zia et al. "Recent developments and future prospects on biobased polyesters derived from renewable resources: A review", International Journal of Biological Macromolecules, Bd. 82, 19. Oktober 2015, Seiten 1028-1040 beschrieben. Die Synthese, die Kristallstruktur und die physikalisch-mechanischen Eigenschaften von PBF sind in Zhu et al. "Poly(butylene 2,5-furan dicarboxylate), a Biobased Alternative to PBT: Synthesis, Physical Properties, and Crystal Structure" Macromolecules, Bd. 46, Nr. 3, 12. Februar 2013, Seiten 796-804 beschrieben.

Der vorliegenden Erfindung liegt nun die Aufgabe zu Grunde, einen Verstärkungscord für elastomere Erzeugnisse, insbesondere für Fahrzeugluftreifen, enthaltend zumindest ein Garn bereitzustellen, der eine Alternative zu herkömmlichen Verstärkungscorden darstellt, umweltfreundliche und ressourcenschonende Materialien enthält, nachhaltig produziert werden kann und der sich gut ohne zu frühe Versprödung des gesponnen Materials verarbeiten lässt. Zudem soll der Verstärkungscord eine gleichbleibende Produktqualität aufweisen.

Die Aufgabe wird dadurch gelöst, dass zumindest ein Garn des Verstärkungscordes Filamente aus Polybutylendicarboxyfuranoat (PBF) enthält, wobei das PBF vollständig oder zumindest teilweise aus Biomassen und/oder nachwachsenden Rohstoffen hergestellt ist.

Polybutylendicarboxyfuranoat (PBF), auch Polybutylenfuranoat oder Poly(butylen 2,5-furandicarboxylat) genannt, ist ein alipharomatischer Polyester der formal durch die Polykondensation von 1,4-Butandiol und 2,5-Furandicarbonsäure hergestellt wird.

Die Verwendung von PBF aus Biomassen und/oder nachwachsenden Rohstoffen im erfindungsgemäßen Verstärkungscord für elastomere Erzeugnisse ist nachhaltig, umweltfreundlich und ressourcenschonend. Zudem weist vollständig oder zumindest teilweise aus Biomassen und/oder nachwachsenden Rohstoffen erzeugtes PBF ebenfalls wie nur aus fossilen Rohstoffen gewonnenes PBF eine gleichbleibende Qualität auf. Somit kann eine gleichbleibende Produktqualität sichergestellt werden. Die im Vergleich zu PEF längere Anzahl an Methyleneinheiten im Diolsegment führt zu einer langsameren Kristallisation. Das Material kann besser ohne frühzeitige Versprödung gesponnen und aufgewickelt werden. Es lässt sich besser verstrecken. Die mechanischen und thermischen Eigenschaften von PBF sind mit denen des auf Erdöl basierenden PBT (Polybutylenterephthalat) vergleichbar. Der Schmelzpunkt von PBF liegt bei ca. 172 °C

Unter dem Passus "PBF aus vollständig oder zumindest teilweise aus nachwachsenden Rohstoffen hergestellt" ist im Rahmen der Erfindung zu verstehen, dass das PBF - ungeachtet der Energiequelle bei der Herstellung - stofflich vollständig oder zumindest teilweise aus Biomassen und/oder nachwachsenden Rohstoffen hergestellt ist. PBF, das vollständig oder zumindest teilweise aus Biomassen und/oder nachwachsenden Rohstoffen besteht, wird nicht nur oder gar nicht (zu 0 Gew.-%) aus fossilen Rohstoffen wie Erdöl gewonnen.

Wie dem Fachmann bekannt ist, kann der Anteil der biobasierten Stoffe, also der Anteil aus nachwachsenden Rohstoffen und/oder Biomassen, im PBF gemäß der ASTM D 6866 (C-14-Methode) bestimmt werden.

Unter Biomasse wird im Rahmen der Erfindung die Gesamtheit allen organischen Materials, das durch Wachstum und Stoffwechsel von Tieren, Pflanzen oder Mikroorganismen gebildet wird, verstanden.

Unter nachwachsenden Rohstoffen werden im Rahmen der Erfindung biogene Ressourcen aus Aquakultur und aus land- und forstwirtschaftlichen Quellen bezeichnet. Unter nachwachsenden Rohstoffen werden daher keine fossilen Quellen, wie Erdöl, verstanden, die durch Abbau zugänglich sind.

Beim PBF kann zum einen das zugrundeliegende Monomer 2,5-Furandicarbonsäure aus Biomassen und/oder nachwachsenden Rohstoffen, wie Cellulose, erzeugt werden, zum anderen kann auch das zweite Monomer 1,4-Butandiol aus Biomassen und/oder nachwachsenden Rohstoffen hergestellt werden. Z. B. gelingt es, 1,4-Butandiol biotechnologisch durch Fermentation von Zucker zu erzeugen.

Bevorzugt werden beide Monomere aus Biomassen und/oder nachwachsenden Rohstoffen erzeugt.

Des Weiteren ist es denkbar, dass eines der beiden Monomere oder beide Monomere als Gemisch vorliegen, d. h., das oder die Monomer(e) dann teilweise aus Biomasse und/oder nachwachsenden Rohstoffen und teilweise aus Erdöl stammt bzw. stammen.

Innerhalb der Garne eines Verstärkungscordes können Filamante aus unterschiedlichen Materialien vorhanden sein. Gemäß einer vorteilhaften Weiterbildung der Erfindung bestehen aber alle Filamente zumindest eines Garnes aus Polybutylendicarboxyfuranoat (PBF). Derartige Garne lassen sich einfach spinnen und zum Garn verdrehen.

Der Verstärkungscord kann aus einem verdrehten, endlosen Multifilamentgarn bestehen. Es ist aber auch möglich, dass der Verstärkungscord zumindest ein weiteres Garn aus Filamenten enthält, wobei die Garne miteinander endverdreht sind. Es sind z. B. Cordkonstruktionen möglich, bei denen zwei (x2-Konstruktion) oder drei (x3-Konstruktion) Garne zu einem Verstärkungscord endverdreht sind.

Das oder die weiteren Garne können aus Filamenten unterschiedlichen Materials bestehen. Sind innerhalb des Verstärkungscordes Garne aus unterschiedlichem Material vorhanden, handelt es sich um einen sogenannten Hybridcord.

Bei dem Material für das weitere Garn kann es sich vorzugsweise um nichtmetallisches Material, wie beispielsweise um Polyester, aliphatische und aromatische Polyamide, Aramid, Polyetherketon, Polyketon, Polyethylennaphthalat, Viskose, Naturfasern oder Glasfasern, handeln. Durch geeignete Materialauswahl kann der Verstärkungscord gezielt in seinen Eigenschaften eingestellt werden.

Gemäß einer bevorzugten Weiterbildung der Erfindung besteht das zumindest eine weitere Garn des Verstärkungscordes aus Filamenten aus Polyamid, einem anderen Polyestertyp als Polybutylendicarboxyfuranoat (PBF), Aramid, Polyketon, oder vorzugsweise aus Chemiefasern aus natürlichen Polymeren oder Naturfasern. Bei Chemiefasern aus natürlichen Polymeren oder Naturfasern bietet sich der Vorteil, dass der gesamte Verstärkungscord auf Materialien basiert, die umweltfreundlich und ressourcenschonend sind und beispielsweise nicht auf Rohöl basieren.

Um ein höheres Schrumpfverhalten des Verstärkungscordes zu erhalten, ist es gemäß einer weiteren vorteilhaften Weiterbildung der Erfindung bevorzugt, wenn er aus wenigstens einem Garn aus Polybutylendicarboxyfuranoat (PBF) und wenigstens einem weiteren Garn aus einem Polyamid (PA) besteht. Dieses ist insbesondere für die Verwendung dieses Hybridcordes in der Gürtelbandage eines PKW-Reifens von Vorteil.

Besonders bevorzugt besteht das weitere Garn aus PA 6.6- und/oder PA 6-Filamenten und/oder PA 10.10-Filamenten und/oder PA 10.12-Filamenten und/oder PA PACM 12-Filamenten. Ganz besonders bevorzugt besteht das Garn aus PA 6.6-Filamenten.

Um einen höheren Modul des Verstärkungscordes zu erhalten, besteht er aus wenigstens einem Garn aus Polybutylendicarboxyfuranoat (PBF) und wenigstens einem weiteren Garn aus Aramid. Dieses ist insbesondere für die Verwendung dieses Hybridcordes in der Gürtelbandage von UHP- (Ultra High Performance-) Reifen von Vorteil.

Um einen stabilen Verstärkungscord weitgehend ohne Schrumpf zu erhalten, besteht er aus wenigstens einem Garn aus Polybutylendicarboxyfuranoat (PBF) und wenigstens einem weiteren Garn aus Rayon. Dieses ist insbesondere für die Verwendung dieses Hybridcordes in der Karkasse von PKW-Reifen und für das Hochgeschwindigkeits-Verhalten von PKW-Reifen von Vorteil.

Alternativ zu den genannten Hybridcorden kann es sich bei dem Verstärkungscord auch um einen solchen handeln, bei dem alle Garne aus Polybutylendicarboxyfuranoat (PBF)-Filamenten bestehen. Dieser Verstärkungscord lässt sich einfach herstellen und ist besonders umweltfreundlich, da er nur von nachwachsenden Rohstoffen abgeleitet ist.

Bei dem Verstärkungscord weist das Garn bzw. weisen die Garne vorzugsweise eine Feinheit von 200 bis 5000 dtex auf Das Garn ist bzw. die Garne sind dabei vorzugweise mit einer Verdrehung von 100 bis 600 t/m, bevorzugt 100 bis 550 t/m, besonders bevorzugt 200 bis 550 t/m, verdreht. Derartige Verstärkungscorde lassen sich einfach herstellen und können z. B. als Festigkeitsträger in Fahrzeugluftreifen eingesetzt werden.

Handelt es sich bei dem Verstärkungscord um einen Cord aus mehreren Garnen, sind diese Garne bevorzugt mit einer Verdrehung von 100 bis 600 t/m, bevorzugt 100 bis 550 t/m, besonders bevorzugt 200 bis 550 t/m, endverdreht. Besonders bevorzugt ist es, wenn die Erstverdrehung des Garnes und die Endverdrehung des Cordes in ihrer Verdrehungszahl ungefähr übereinstimmen, wobei vorzugsweise die Drehrichtungen von Garnen und Cord entgegengesetzt sind.

Um eine ausreichende Ermüdungsbeständigkeit der Verstärkungscorde zu erhalten, ist es von Vorteil, wenn der Twistfaktor α eines jeden Garnes oder des Verstärkungscordes zwischen 100 bis 300, vorzugsweise zwischen 150 und 250, liegt, wobei sich der Twistfaktor α nach folgender Formel berechnet: α=Twist [t/m] x (Feinheit [tex]/1000)^{1/2}.

Um eine zuverlässige Haftung von textilen Festigkeitsträgern zum Gummi zu gewährleisten, ist es zweckmäßig, den erfindungsgemäßen Verstärkungscord mit einer Haftimprägnierung, z.B. mit einem RFL-Dip im 1- oder 2-Bad-Verfahren, zu versehen.

Der erfindungsgemäße Verstärkungscord kann in unterschiedlichsten elastomeren Erzeugnissen, wie Riemen, Fördergurten, Schläuchen oder Luftfedern, eingesetzt werden.

Bei dem erfindungsgemäßen elastomeren Erzeugnis handelt es sich vorzugsweise um einen Fahrzeugluftreifen. Fahrzeugluftreifen sind Massenprodukte, bei denen der Austausch herkömmlicher Verstärkungscorde gegen biobasierte Verstärkungscorde, zu einem besonders großen Effekt hinsichtlich der Ressourcenschonung führt.

Bevorzugt enthält der Fahrzeugluftreifen den Verstärkungscord in der Karkasslage und/oder in wenigstens einer Gürtellage und/oder als Wulstverstärker und/oder in der Gürtelbandage. Besonders bevorzugt enthält der Fahrzeugluftreifen den Verstärkungscord in der Karkasslage und/oder in der Gürtelbandage.

## Patentansprüche

1. Verstärkungscord für elastomere Erzeugnisse, insbesondere für Fahrzeugluftreifen, enthaltend zumindest ein Garn aus Filamenten, **dadurch gekennzeichnet, dass** zumindest ein Garn des Verstärkungscordes Filamente aus Polybutylendicarboxyfuranoat (PBF) enthält, wobei das PBF vollständig oder zumindest teilweise aus Biomassen und/oder nachwachsenden Rohstoffen hergestellt ist.

2. Verstärkungscord nach Anspruch 1, **dadurch gekennzeichnet, dass** zumindest ein Garn des Verstärkungscordes Filamente aus Polybutylendicarboxyfuranoat (PBF) enthält, wobei das PBF vollständig aus Biomassen und/oder nachwachsenden Rohstoffen hergestellt ist.

3. Verstärkungscord nach Anspruch 1 oder 2, **dadurch gekennzeichnet, dass** das alle Filamente zumindest eines Garnes aus Polybutylendicarboxyfuranoat (PBF) bestehen.

4. Verstärkungscord nach zumindest einem Ansprüche 1 bis 3, **dadurch gekennzeichnet, dass** er zumindest ein weiteres Garn aus Filamenten enthält, wobei die Garne miteinander endverdreht sind.

5. Verstärkungscord nach Anspruch 4, **dadurch gekennzeichnet, dass** das zumindest eine weitere Garn aus Filamenten aus einem nichtmetallischen Material besteht.

6. Verstärkungscord nach zumindest einem der Ansprüche 4 bis 5, **dadurch gekennzeichnet, dass** das zumindest eine weitere Garn aus Filamenten aus Polyamid, einem anderen Polyester als Polybutylendicarboxyfuranoat (PBF), Aramid, Polyketon, oder vorzugsweise aus Chemiefasern aus natürlichen Polymeren oder Naturfasern besteht.

7. Verstärkungscord nach zumindest einem der Ansprüche 1 bis 5, **dadurch gekennzeichnet, dass** alle Garne des Verstärkungscordes aus Polybutylendicarboxyfuranoat (PBF)-Filamenten bestehen.

8. Verstärkungscord nach zumindest einem der Ansprüche 1 bis 7, **dadurch gekennzeichnet, dass** das Garn bzw. die Garne eine Feinheit von 200 und 5000 dtex aufweisen.

9. Verstärkungscord nach zumindest einem der Ansprüche 1 bis 8, **dadurch gekennzeichnet, dass** der Twistfaktor α eines jeden Garnes oder des Verstärkungscordes zwischen 100 bis 300, vorzugsweise zwischen 150 und 250, liegt, wobei sich der Twistfaktor α nach folgender Formel berechnet: α=Twist [t/m] x (Feinheit [tex]/1000)^{1/2}.

10. Elastomeres Erzeugnis, **dadurch gekennzeichnet, dass** es zumindest einen Verstärkungscord nach einem der Ansprüche 1 bis 9 enthält.

11. Elastomers Erzeugnis nach Anspruch 10, **dadurch gekennzeichnet, dass** es sich um einen Riemen, einen Fördergurt, einen Schlauch oder eine Luftfeder handelt.

12. Elastomers Erzeugnis nach Anspruch 10, **dadurch gekennzeichnet, dass** es sich um einen Fahrzeugluftreifen handelt.

13. Elastomeres Erzeugnis nach Anspruch 12, **dadurch gekennzeichnet, dass** der Fahrzeugluftreifen zumindest einen Verstärkungscord nach einem der Ansprüche 1 bis 8 in der Karkasslage und/oder in wenigstens einer Gürtellage und/oder als Wulstverstärker und/oder in der Gürtelbandage enthält.

## Claims

1. Reinforcement cord for elastomeric products, in particular for pneumatic tires, comprising at least one yarn made of filaments, **characterized in that** at least one yarn of the reinforcement cord comprises filaments made of polybutylene dicarboxyfuranoate (PBF), where the PBF has been produced entirely or at least to some extent from biomasses and/or from renewable raw materials.

2. Reinforcement cord according to Claim 1, **characterized in that** at least one yarn of the reinforcement cord comprises filaments made of polybutylene dicarboxyfuranoate (PBF), where the PBF has been produced entirely from biomasses and/or from renewable raw materials.

3. Reinforcement cord according to Claim 1 or 2, **characterized in that** all filaments at least of one yarn consist of polybutylene dicarboxyfuranoate (PBF).

4. Reinforcement cord according to at least one of Claims 1 to 3, **characterized in that** it comprises at least one further yarn made of filaments, where the yarns have undergone end-twisting together.

5. Reinforcement cord according to Claim 4, **characterized in that** the at least one further yarn consists of filaments made of a nonmetallic material.

6. Reinforcement cord according to at least one of Claims 4 to 5, **characterized in that** the at least one further yarn consists of filaments made of polyamide, of a polyester other than polybutylene dicarboxyfuranoate (PBF), of aramid, of polyketone, or preferably of manufactured fibers made of natural polymers or of natural fibers.

7. Reinforcement cord according to at least one of Claims 1 to 5, **characterized in that** all yarns of the reinforcement cord consist of polybutylene dicarboxyfuranoate (PBF) filaments.

8. Reinforcement cord according to at least one of Claims 1 to 7, **characterized in that** the linear density of the yarn(s) is 200 and 5000 dtex.

9. Reinforcement cord according to at least one of Claims 1 to 8, **characterized in that** the twist factor α of each yarn or of the reinforcement cord is between 100 and 300, preferably between 150 and 250, where the twist factor α is calculated according to the following formula: α = twist [t/m] x (linear density [tex]/1000)^{1/2}.

10. Elastomeric product, **characterized in that** it comprises at least one reinforcement cord according to any of Claims 1 to 9.

11. Elastomeric product according to Claim 10, **characterized in that** it is a drive belt, a conveyor belt, a hose or an air spring.

12. Elastomeric product according to Claim 10, **characterized in that** it is a pneumatic tire.

13. Elastomeric product according to Claim 12, **characterized in that** the pneumatic tire comprises at least one reinforcement cord according to any of Claims 1 to 8 in the carcass ply and/or in at least one bracing ply and/or as bead reinforcer and/or in the belt bandage.

## Revendications

1. Câblé de renforcement pour des produits élastomères, en particulier pour des pneumatiques de véhicule, contenant au moins un filé de filaments, **caractérisé en ce qu'**au moins un filé du câblé de renforcement contient des filaments de dicarboxyfuranoate de polybutylène (PBF), le PBF étant, en totalité ou au moins en partie, fabriqué à partir de biomasses et/ou de matières premières renouvelables.

2. Câblé de renforcement selon la revendication 1, **caractérisé en ce qu'**au moins un filé du câblé de renforcement contient des filaments de dicarboxyfuranoate de polybutylène (PBF), le PBF étant en totalité fabriqué à partir de biomasses et/ou de matières premières renouvelables.

3. Câblé de renforcement selon la revendication 1 ou 2, **caractérisé en ce que** tous les filaments sont constitués d'au moins un filé de dicarboxyfuranoate de polybutylène (PBF).

4. Câblé de renforcement selon au moins l'une des revendications 1 à 3, **caractérisé en ce qu'**il contient au moins un filé de filaments supplémentaire, les filés étant soumis à une torsion en bout les uns avec les autres.

5. Câblé de renforcement selon la revendication 4, **caractérisé en ce que** l'au moins un filé de filaments supplémentaire est constitué d'un matériau non métallique.

6. Câblé de renforcement selon au moins l'une des revendications 4 à 5, **caractérisé en ce qu'**au moins un filé de filaments supplémentaire est constitué d'un polyamide, d'un polyester différent du dicarboxyfuranoate de polybutylène (PBF), d'aramide, de polycétone, ou de préférence de fibres chimiques constituées de polymères naturels, ou de fibres naturelles.

7. Câblé de renforcement selon au moins l'une des revendications 1 à 5, **caractérisé en ce que** tous les filés du câblé de renforcement sont constitués de filaments de dicarboxyfuranoate de polybutylène (PBF).

8. Câblé de renforcement selon au moins l'une des revendications 1 à 7, **caractérisé en ce que** le filé ou les filés présentent un titre de 200 à 5 000 dtex.

9. Câblé de renforcement selon au moins l'une des revendications 1 à 8, **caractérisé en ce que** le facteur de torsion α de chaque filé ou du câblé de renforcement est compris entre 100 et 300, de préférence entre 150 et 250, le facteur de torsion α étant calculé par la formule suivante : α = Torsion [tr/m] x (Titre [tex]/1 000)^{1/2}.

10. Produit élastomère, **caractérisé en ce qu'**il contient au moins un câblé de renforcement selon l'une des revendications 1 à 9.

11. Produit élastomère selon la revendication 10, **caractérisé en ce qu'**il s'agit d'une courroie, d'une bande transporteuse, d'un tuyau flexible ou d'un ressort pneumatique.

12. Produit élastomère selon la revendication 10, **caractérisé en ce qu'**il s'agit d'un pneumatique de véhicule.

13. Produit élastomère selon la revendication 12, **caractérisé en ce que** le pneumatique de véhicule contient au moins un câblé de renforcement selon l'une des revendications 1 à 8 dans la nappe carcasse et/ou dans au moins une nappe d'armature et/ou comme renforcement de talon et/ou dans le bandage de ceinture.
